**Europäisches Patentamt**

**European Patent Office**

**Office européen des brevets**

(19)

(11) Veröffentlichungsnummer: **0 160 731**
**B1**

(12) # EUROPÄISCHE PATENTSCHRIFT

(45) Veröffentlichungstag der Patentschrift:
**03.02.88**

(51) Int. Cl.⁴: **B 05 C 5/04,** B 05 C 9/14,
F 16 L 11/12

(21) Anmeldenummer: **84107900.7**

(22) Anmeldetag: **06.07.84**

(54) Schmelzkleberschlauch.

(30) Priorität: **30.04.84 DE 3416105**

(43) Veröffentlichungstag der Anmeldung:
**13.11.85 Patentblatt 85/46**

(45) Bekanntmachung des Hinweises auf die Patenterteilung:
**03.02.88 Patentblatt 88/5**

(84) Benannte Vertragsstaaten:
**AT BE CH DE FR GB IT LI LU NL SE**

(56) Entgegenhaltungen:
**EP-A-0 079 787**
**CH-A-297 507**
**DE-A-2 836 545**
**DE-A-3 234 476**
**US-A-2 850 421**

(73) Patentinhaber: **MELTEX Verbindungs- technik
GmbH, Industriegebiet Hafen, D-2120 Lüneburg
(DE)**

(72) Erfinder: **Regge, Klaus- Dieter, Am Springintgut 21,
D-2120 Lüneburg (DE)**

(74) Vertreter: **Dipl.- Ing. Schwabe, Dr. Dr. Sandmair,
Dr. Marx, Stuntzstrasse 16 Postfach 86 02 45,
D-8000 München 86 (DE)**

EP 0 160 731 B1

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

## Beschreibung

Die Erfindung betrifft einen Schmelzkleberschlauch gemäß dem Oberbegriff des Anspruchs 1.

Ein solcher Schmelzkleberschlauch verbindet ein Gerät zum Verflüssigen von Schmelzmassen, wie es etwa durch die DE-OS-28 36 545 bekannt ist, mit einem Auftragkopf für den Kleber.

Der Schlauch weist seinerseits eine mittig angeordnete Schlauchseele auf, die von einem flexiblen Rohr aus einem Kunststoff gebildet ist, der Temperaturen bis zu 250°C standhält. Diese Schlauchseele ist mit einem Stahlschutzmantel umgeben und so ausgelegt, daß sie einem Innendruck von bis zu 160 bar standzuhalten vermag.

Ferner ist ein Heizband vorgesehen, welches in wärmeleitender Verbindung mit der Schlauchseele steht und insbesondere wendelförmig um diese herumgewickelt ist.

Heizband und Schlauchseele sind von einer Schicht aus Wärmedämmaterial umgeben, deren Außenseiten mit einem wasserdichten Schutzmantel aus Kunststoff oder einer Panzerung versehen ist. Diese Schicht verhindert Wärmeverluste.

Ferner kann der Schlauch - bevorzugt innerhalb der Schicht aus Wärmedämmaterial - Leitungen aufweisen, die mit Temperaturmeßfühlern und Steuereinrichtungen für den Betrieb des Auftragkopfes verbunden sind.

Im Betrieb liefert das eingangs genannte Gerät zum Verflüssigen von Schmelzmassen unter hohem Druck einen heißen und somit auch fließfähigen Schmelzkleber, der die Schlauchseele durchströmt und in einen Auftragkopf eingeleitet wird. Hierbei wird mittels des Heizbandes, mindestens eines Temperaturmeßfühlers und einer Regelungseinrichtung sichergestellt, daß der in der Schlauchseele befindliche Schmelzkleber stets im Bereich der optimalen Temperatur liegt.

Der Innendurchmesser der Schlauchseele liegt hierbei bevorzugt im Bereich von etwa 8 mm.

Wenn als Auftragkopf ein Schmelzkleber-Sprühkopf verwendet wird, dann wird in diesem Sprühkopf der zugeführte, heiße Schmelzkleber zerstäubt und in dieser Form aufgetragen.

Verwendet man nun zum Zerstäuben des Schmelzklebers Kaltluft, also Luft mit Umgebungstemperatur, dann ergibt dies ein schlechtes Auftragsbild und bewirkt die zu rasche Verfestigung des Schmelzklebers. Man ist daher dazu übergegangen, die dem Sprühkopf zugeführte Druckluft vorher in einer gesonderten Einrichtung zu erwärmen.

Nachteilig ist hierbei nicht nur der Umstand, daß der Auftragkopf nicht mehr, wie bisher, nur an einen Schlauch, sondern an zwei Schläuche angeschlossen ist, sondern es ist besonders nachteilig, daß für die Druckluftversorgung eine eigene Heizeinrichtung erforderlich ist, welche ihrerseits am besten auch wieder temperaturgeregelt sein sollte.

Ausgehend von dieser Problemlage liegt der Erfindung die Aufgabe zugrunde, den eingangs genannten, bekannten Schmelzkleberschlauch dahingehend weiterzubilden, daß sich die Verwendung einer gesonderten Heizeinrichtung und einer gesonderten Schlauchleitung für den Betrieb eines Schmelzkleber-Sprühkopfes erübrigt.

Diese Aufgabe wird erfindungsgemäß durch die Merkmale des Anspruchs 1 gelöst. Hierbei weist der erfindungsgemäße Schmelzkleberschlauch nicht nur einen Hohlkanal auf, sondern zwei Hohlkanäle. Der zweite Hohlkanal dient als Druckluftleitung und befindet sich in wärmeaustauschender Verbindung mit dem Heizband, und zwar entweder unmittelbar mit diesem oder mittelbar über den in der Schlauchseele befindlichen, vom Heizband temperierten Schmelzkleber.

Der Schlauch bildet somit nicht nur eine bauliche Vereinigung zweier bisher getrennt angeordneter Schläuche, sondern außerdem zusätzlich eine Einrichtung zum Erwärmen der Druckluft, wobei diese Einrichtung lediglich durch die Wärmeübertragende Verbindung mit dem bereits vorhandenen Heizband geschaffen wird, ohne daß deshalb ein einziges, zusätzliches Bauteil erforderlich wäre.

Die Erfindung löst somit auf elegante Weise die eingangs gestellte Aufgabe, wobei beim Betrieb einer aus Verflüssigungsgerät, Schlauch und Sprühkopf gebildeten Schmelzkleberanlage der zusätzliche Druckluftschlauch und die Druckluft-Heizeinrichtung entfallen können, da diese beiden Funktionselemente durch die erfindungsgemäße Integrierung des Luftkanals in den Schmelzkleberschlauch überflüssig geworden sind.

Es kann von Vorteil sein, und zwar besonders bei kurzen Schläuchen, den an den Lufteinlaß anschließenden ersten Abschnitt des Luftkanales mit größerem Querschnitt als den Rest des Luftkanales auszubilden, wobei gegebenenfalls eine verstärkte oder zusätzliche Heizeinrichtung in dem Bereich mit vergrößertem Querschnitt angeordnet sein kann. Dieser bildet sozusagen eine Vorwärmkammer für die kalte Druckluft, welche dann nach Verlassen der Vorwärmkammer im Rest des Kanales auf die gewünschte Endtemperatur gebracht wird.

Gemäß einer weiteren Ausgestaltung der Erfindung ist es aber besonders von Vorteil, insbesondere bei der Verwendung längerer Schläuche den Luftkanal mit einem über seine Länge gleichbleibenden Querschnitt auszubilden; in diesem Fall kann der Schlauch aus Meterware gefertigt und auf die im Einzelfall gewünschte Länge abgelängt werden.

Für die bauliche Ausführung des Luftkanales gibt es eine Fülle von Möglichkeiten: so ist es beispielsweise möglich, neben der Schlauchseele, die als Leitung für den Schmelzkleber dient, ein zweites, flexibles und im wesentlichen mittiges Rohr anzuordnen, wobei dann beide Rohre gemeinsam vom Heizband umwickelt sind. Es ist auch möglich, das Heizband zwischen den beiden Rohren anzuordnen. Es wäre auch möglich, als Schlauchseele ein mittels einer Trennwand in zwei Kammern unterteiltes, extrudiertes, flexibles Kunststoffrohr zu verwenden, wobei allerdings der Luftdruck an den Schmelzkleberdruck anzupassen wäre.

Gemäß einer weiteren, bevorzugten Ausgestaltung der Erfindung ist es aber besonders von Vorteil, daß der Luftkanal wendelförmig rund um die Schlauchseele verläuft, so daß der Luftkanal wesentlich länger ist als die Schlauchseele. Es ist somit möglich, die Temperatur der Druckluft allmählich an jene des Schmelzklebers anzugleichen, ohne daß deshalb das Heizband eine wesentlich höhere Temperatur haben müßte, da die lange Kontaktstrecke zwischen Luftkanalwand und Luft auch bei verhältnismäßig niedrigen Temperaturen des Heizbandes die ausreichende Erwärmung der Druckluft sicherstellt. Es ist somit das Risiko der örtlichen Überhitzung des Schmelzklebers ausgeschlossen und gleichzeitig ermöglicht, die bereits vorhandene Heiz- und Regeleinrichtung eines bekannten Schmelzkleberschlauches praktisch unverändert weiter zu benutzen. In diesem Fall wird lediglich das Heizband eine höhere Stromaufnahme und ein trägeres Ansprechverhalten aufweisen.

Da der wendelförmige Luftkanal auch bei einer verhältnismäßig kurzen Länge des Schmelzkleberschlauches zu einem verhältnismäßig langen Luftkanal führt, der einen dementsprechend großen Luftwiderstand aufweist, ist es möglich, den Kanalquerschnitt des Luftkanals bei dessen gleichzeitiger Verlängerung unter Beibehaltung der Gesamt-Strömungsverluste dieses Luftkanales zu vergrößern, so daß die Verstopfungsgefahr dieses Luftkanales verringert wird.

Ferner verhindert die wendelförmige Ausbildung des Luftkanales die Gefahr des Abklemmens des Luftkanales infolge unzulässiger Biegung des Schmelzkleberschlauches.

Wie bereits oben erwähnt, ist es möglich, den Luftkanal als flexibles Rohr auszubilden, welches, als wendelförmige Spirale verformt, außen um die Schlauchseele oder das Heizband herumgelegt wird. Gemäß einer weiteren Ausgestaltung der Erfindung liegt aber eine besonders einfache und infolge des günstigen Wärmeüberganges auch verlustarme Ausgestaltung der Erfindung darin, daß zwischen der Schlauchseele und der Schicht aus wärmedämmaterial ein Ringraum gebildet ist, der von dem wendelförmig angeordneten Heizband, welches die Hin- und Rückleitung enthält, ausgefüllt ist. Hierbei weisen die einzelnen Gänge des wendelförmigen Heizbandes gegenseitig Abstände auf, und die durch diese Abstände ausgesparten Zwischenräume bilden nun ihrerseits den Luftkanal. Hierbei ist es möglich, das Heizband gegebenenfalls auch mehrgängig auszubilden, so daß mehrere, nebeneinander verlaufende Luftkanäle gebildet werden können.

Um zu verhindern, daß der Schmelzkleber im Bereich des Einlaß- und Auslaßendes des Schmelzkleberschlauches durch die Druckluft abgekühlt wird, wird gemäß einer weiteren Ausgestaltung der Erfindung vorgeschlagen, daß der Lufteinlaß und/oder Luftauslaß nicht an den Endflächen des Schmelzkleberschlauches angeordnet ist, sondern im Bereich dieser Enden die Schicht aus Wärmedämmaterial durchdringt und zur Schlauchaußenseite hin mündet.

In der beigefügten, schematischen Zeichnung ist die Erfindung anhand eines Ausführungsbeispiels noch näher erläutert. Es zeigen:

Fig. 1 die schematische Darstellung einer Anlage zum Aufbringen von Schmelzkleber,

Fig. 2 einen teilweise aufgeschnittenen Abschnitt eines erfindungsgemäßen Schmelzkleberschlauches, und

Fig. 3 einen Querschnitt durch den in Fig. 2 gezeigten Schlauch.

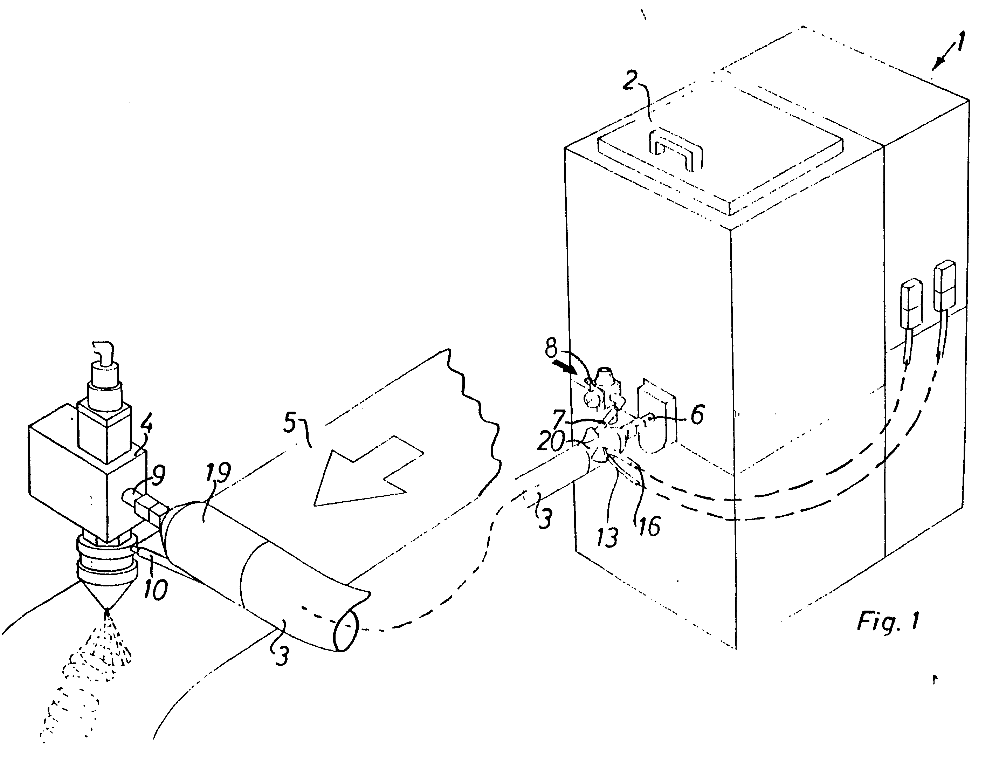

In Fig. 1 ist eine Anlage zum Auftragen von Schmelzkleber gezeigt, mit einem Schmelzkleber-Verflüssigunggerät 1, welches etwa so ausgebildet sein kann, wie dies in der DE-OS-28 36 545 gezeigt ist. Das Verflüssigungsgerät 1 weist an seiner Oberseite einen Einfülldeckel 2 für nachzufüllenden Schmelzkleber auf.

Die Anlage weist ferner einen Schmelzkleberschlauch 3 auf, der im linken Teil der Fig. 1 größer gezeigt ist als im rechten Teil. Dieser Schmelzkleberschlauch 3 mündet in einen Sprühkopf 4 ein, aus dessen Unterseite durch gestrichelte Linien schematisch dargestellter, versprühter Schmeizkleber auf eine in Pfeilrichtung bewegte, mit Schmelzkleber zu beschichtende Materialbahn 5 aufgetragen wird.

Der Schmelzkleberschlauch 3 weist an seinem Einlaßende einen Anschlußstutzem 6 auf, der an einem entsprechenden Gegenstück des Verflüssigungsgeräts 1 befestigt ist. Am Auslaßende weist der Schlauch 3 einen weiteren Stutzen 9 auf, der an einem Gegenstück des Sprühkopfes 4 befestigt ist.

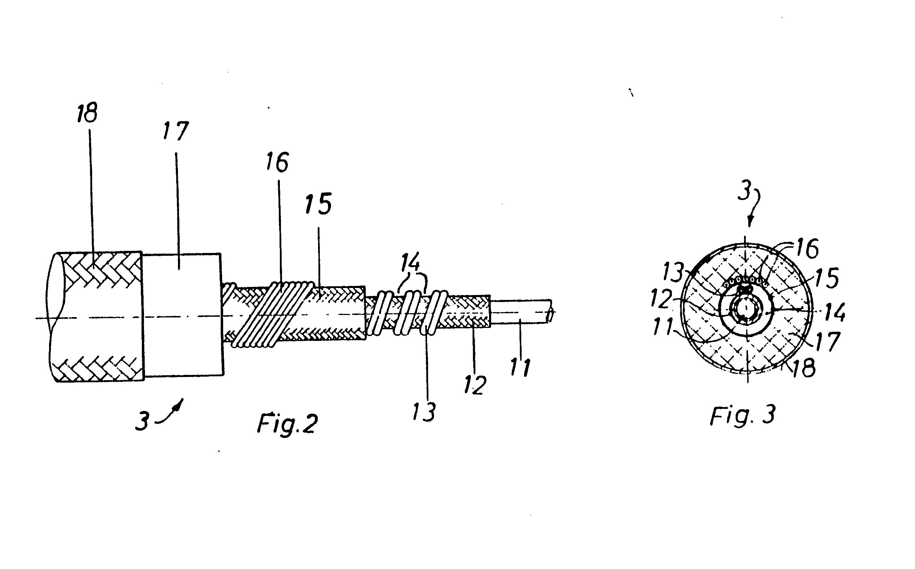

Am Einlaßende des Schlauches 3 sind durch dessen Außenwand drei Anschlüsse nach außen geführt, und zwar ein Drucklufteinlaßschlauch 7, der in ein Druckluft-Regulierventil 8 einmündet, welches durch in Pfeilrichtung strömende Druckluft beaufschlagt wird. Ferner durchtreten die Außenwand des Schlauches 3 noch zwei Leitungen, die über Stecker am Verflüssigungsgerät 1 angeschlossen sind, und zwar eine mit einem Heizband im Inneren des Schlauches (sh. Fig. 2) verbundene Zuleitung sowie eine Steuerleitung.

Am Auslaßende durchdringt ein Auslaßschlauch 10 für Warmluft die Außenwand des Schmelzkleberschlauches 3 und mündet in die Unterseite des Sprühkopfes 4 ein.

Die in Fig. 1 gezeigte Anlage arbeitet wie folgt:

im Gerät 1 wird durch den Deckel 2 eingegebener Schmelzkleber erwärmt und dadurch verflüssigt, sowie durch eine (nicht gezeigte) Hochdruck-Verdrängungspumpe über den Anschluß 6 in den Schlauch 3 eingeleitet. Gleichzeitig wird in Pfeilrichtung dem Regulierventil 8 kalte Druckluft zugeführt und über den Anschlußschlauch 7 in den Schmelzkleberschlauch 3 eingeleitet.

An dessen Auslaßende verläßt der Schmelzkleber den Schlauch 3 über den Stutzen 9 mit etwa der gleichen Temperatur, die er beim Eintritt in den Schlauch 3 aufwies; am Auslaßende verläßt auch die Druckluft über den Schlauch 10 den Schmelzkleberschlauch 3, jedoch mit etwa der gleichen Temperatur, wie sie auch der Schmelzkleber aufweist.

Diese derart erwärmte Druckluft wird im Sprühkopf 4 derart in einen Schmelzkleberstrom eingeleitet, das dieser zerstäubt wird, wobei der entsprechend temperierte Luftstrom eine solche Temperatur aufweist, daß er einerseits nicht zum vorzeitigen Erstarren des aufgetragenen Schmelzklebers führt, andererseits aber auch nicht zu dessen Überhitzung und somit Beschädigung beim Verlassen des Sprühkopfes 4.

Der Schlauch 3 ist im einzelnen näher in Fig. 2 und 3 gezeigt.

Der Schlauch 3 weist eine Schlauchseele 11 auf, die aus einem flexiblen Kunststoffrohr gebildet ist, dessen Rohr so gewählt ist, das es einerseits bis zu einer Temperatur von etwa 250°C beständig ist, andererseits einen geringen Wärmeübergangskoeffizienten liefert, und schließlich auch berstsicher ist. Diese Schlauchseele 11 ist von einem Schutzmantel 12 aus Stahl umgeben, auf welchen ein Heizband 13 wendelförmig aufgewickelt ist. Das Heizband weist zwei miteinander verbundene Leitungen auf, die gemeinsam wendelförmig um den Stahlschutzmantel 12 herumgelegt sind, wobei der Abstand der einzelnen Gänge der so gebildeten Wendel etwa 4 mm beträgt.

Über das Heizband ist ein Schutzmantel aus Glasfasermaterial übergeschoben, der begrenzt flexibel ist und somit dafür sorgt, daß ein Mindestknickradius nicht unterschritten wird. Ferner überdeckt der Glasfaserschutzmantel 15 infolge seiner Formbeständigkeit das Heizband 13 auf eine solche Weise, daß zwischen den einzelnen Wendeln ein wendelförmig um den Stahlschutzmantel 12 herumlaufender Luftkanal 14, der, in radialer Richtung gesehen, nach innen durch den Stahlschutzmantel 12 und nach außen durch den Glasfaserschutzmantel 15 begrenzt ist, und axial in beiden Richtungen jeweils durch das Heizband 14 begrenzt ist.

Auf die Außenseite des Glasfaserschutzmantel 15 sind Steuerleitungen 16 derart aufgewickelt, daß sie beim Biegen des Schlauches 3 nicht Schaden nehmen können.

Die Steuerleitungen 16 sind in eine Isolierschicht 17 aus Siliconschaum eingebettet, welche konzentrisch mit einer Dicke von etwa 12 mm den Glasfaserschutzmantel 15 umgibt. Auf die Außenseite der Isolierung 17 ist schließlich noch ein Kunststoffschutzmantel 18 aufgebracht bzw. aufgeflochten.

In Fig. 3 ist der Schmelzkleberschlauch 3 im Querschnitt gezeigt, wobei besonders der Luftkanal 14 deutlich erkennbar ist.

Der gezeigte Schmelzkleberschlauch 3 weist bevorzugt eine Länge von etwa 2 m auf; die Schlauchseele weist einen Innendurchmesser von etwa 8 mm auf, während der Luftkanal einen Querschnitt aufweist, der etwa ein Rechteck mit 3 bzw. 4 mm Kantenlänge bildet. Die Druckluftanschlüsse 7, 10 und die Stromanschlüsse zu den Leitungen 13, 16 sind jeweils an den Enden des Schlauches 3 im Bereich von verstärkten Silicon-Endkappen umfangsseitig nach außen geführt, die in Fig. 1 mit 19 bzw. 20 bezeichnet sind.

**Patentansprüche**

1. Schmelzkleberschlauch aus einer von einem flexiblen Rohr insbesondere aus Kunststoff gebildeten Schlauchseele (11), einem der Schlauchseele benachbarten, insbesondere wendelförmig um diese herumgelegten Heizband (13) und einer diese nach außen umschließenden Schicht (17) aus Wärmedämmaterial, mit einem Einlaßende und einem Auslaßende, dadurch gekennzeichnet, daß innerhalb der Schicht (17) aus Wärmedämmaterial und in wärmeübetragender Verbindung mit dem Heizband (13) ein Luftkanal (14) ausgebildet ist, der einen Lufteinlaß (7) im Bereich des Einlaßendes sowie einen Luftauslaß (10) im Bereich des Auslaßendes aufweist.

2. Schlauch nach Anspruch 1, dadurch gekennzeichnet, daß der Querschnitt des Luftkanales (14) über dessen Länge hinweg im wesentlichen konstant ist.

3. Schlauch nach einem der Ansprüche 1 oder 2, dadurch gekennzeichnet, daß der Luftkanal (14) wendelförmig rund um die Schlauchseele (11) verläuft.

4. Schlauch nach Anspruch 3, dadurch gekennzeichnet, daß zwischen der Schlauchseele (11) und der Schicht (17) aus Wärmedämmaterial ein Ringraum gebildet ist, in welchem das wendelförmige Heizband (13) angeordnet ist, und daß der Luftkanal (14) von dem Zwischenraum zwischen benachbarten Gängen des wendelförmigen Heizbandes (13) gebildet ist.

5. Schlauch nach einem der Ansprüche 1 bis 4, dadurch gekennzeichnet, daß der Lufteinlaß (7) und/oder Luftauslaß (10) die Schicht (17) aus Wärmedämmaterial zur Schlauchaußenseite hin durchdringt.

## Claims

1. A hot-melt adhesive tube consisting of an inner tube (11) formed by a flexible tube, particularly of plastics material, a band heater (13) adjacent to the inner tube and, in particular, laid round this in the form of a helix, and a layer (17) of heat insulating material surrounding this on the outside, with an inlet and an outlet end, characterised in that constructed inside the layer (17) of heat insulating material and in heat-transmitting communication with the band heater (13) is an air passage (14) which comprises an air inlet (7) in the region of the inlet end and an air outlet (10) in the region of the outlet end.

2. A tube as claimed in Claim 1, characterised in that the cross-section of the air passage (14) is substantially constant over its length.

3. A tube as claimed in one of the Claims 1 or 2, characterised in that the air passage (14) extends helically round the inner tube (11).

4. A tube as claimed in Claim 3, characterised in that formed between the inner tube (11) and the layer (17) of heat insulating material is an annular space in which the helical band heater (13) is disposed and that the air passage (14) is formed by the gap between adjacent turns of the helical band heater (13).

5. A tube as claimed in one of the Claims 1 to 4, characterised in that the air inlet (7) and/or air outlet (10) penetrates through the layer (17) of heat insulating material towards the outside of the tube.

## Revendications

1. Tuyau pour colle fusible composé d'une âme (11) constituée par un tube flexible, notamment en matière plastique, d'une bande chauffante (13) voisinant l'âme, en particulier enroulée sur celle-ci de manière hélicoïdale, et d'une couche (17) de matériau calorifuge qui l'enferme extérieurement, avec une extrémité d'entrée et une extrémité de sortie, caractérisé en ce que, à l'intérieur de la couche (17) de matériau calorifuge et en liaison thermique avec la bande chauffante (13) est formé un conduit d'air (14) muni d'une entrée d'air (7) dans la région de l'extrémité d'entrée et d'une sortie d'air (10) dans la région de l'extrémité de sortie.

2. Tuyau selon la revendication 1, caractérisé en ce que la section transversale du conduit d'air (14) reste essentiellement constante sur toute la longueur de celui-ci.

3. Tuyau selon l'une des revendications 1 ou 2, caractérisé en ce que le conduit d'air (14) s'étend de manière hélicoïdale autour de l'âme (11).

4. Tuyau selon la revendication 3, caractérisé en ce que, entre l'âme (11) et la couche (17) de matériau calorifuge, conformé un espace annulaire dans lequel est disposé la bande chauffante (13) hélicoïdale, et que le conduit d'air (14) est réalisé par l'espace entre les spires voisines de la bande chauffante (13) en forme d'hélice.

5. Tuyau selon l'une quelconque des revendications 1 à 4, caractérisé en ce que l'entrée d'air (7) et/ou la sortie d'air (10) traverse la couche (17) de matériau calorifuge en direction de l'extérieur du tuyau.

Fig. 1

Fig.2

Fig. 3